# EUROPÄISCHE PATENTSCHRIFT

(11) **EP 2 372 190 B1**
(45) Veröffentlichungstag und Bekanntmachung des Hinweises auf die Patenterteilung: **08.07.2015**
(21) Anmeldenummer: 11158811.7
(22) Anmeldetag: 18.03.2011
(51) Int. Cl.: F16H 25/06

(54) **Übersetzungsgetriebe**
Transmission gearing
Transmetteur

(30) Priorität: 22.03.2010 DE 102010003098
(43) Veröffentlichungstag der Anmeldung: 05.10.2011
(73) Patentinhaber: Ewert, Thomas, 80689 München (DE); Freundorfer, Theodor, 81479 München (DE)
(72) Erfinder: Ewert, Thomas, 80689 München (DE)
(74) Vertreter: Klinski, Robert

(56) Entgegenhaltungen:
- EP-A2- 0 781 941
- DE-A1- 3 809 992
- JP-A- 2 253 037
- US-A- 1 791 025
- US-A- 5 600 999

## Beschreibung

Die vorliegende Erfindung betrifft das Gebiet der Übersetzungsgetriebe, welche insbesondere zur Über- oder Untersetzung von Drehzahlen oder Drehmomenten eingesetzt werden können.

Zur Drehzahl- oder Drehmomentübersetzung werden üblicherweise Zahnrad- bzw. Reibradgetriebe eingesetzt. Nachteilig an derartigen Getrieben ist jedoch die Notwendigkeit von Zwischenwellen, an welchen beispielsweise die Zahnräder eines Zahnradgetriebes befestigt sind. Darüber hinaus ist die Fertigung von Zahnrädern aufwändig und bei geringeren Stückzahlen kostenintensiv. Baubedingt ermöglichen Zahnradgetriebe ferner keine koaxiale Kraftübertragung ohne Zwischenwellen. Ferner sind zur Übertragung größerer Kräfte üblicherweise größere Getriebedimensionen notwendig.

Die Offenlegungsschrift DE 38 09 992 A1 zeigt eine Vorrichtung zur formschlüssigen Übertragung oder Umwandlung von Kräften und Bewegungen.

Die Offenlegungsschrift JP 2 253 037 A zeigt ein Getriebe mit einer Scheibe, welche eine Nut in Form einer Sinuswelle aufweist.

Die Offenlegungsschrift EP 0 781 941 A2 zeigt ein Getriebe mit einer Scheibe umfassend eine Nut, welche eine gewellt-gezackte Form aufweist.

Die Patentschrift US 5,600,999 zeigt ein Getriebe umfassend eine Scheibe mit einer Führungsnut, welche gezackt verläuft. Zwischen den einzelnen Zacken verläuft die Führungsnut geradlinig.

Die Patentschrift US 1,791,025 zeigt ein Getriebe umfassend zwei zueinander parallel angeordnete Scheiben, wobei in den Scheiben eine spiralförmige Nut gebildet ist.

Es ist die Aufgabe der vorliegenden Erfindung, ein effizienteres Getriebekonzept zu schaffen. Diese Aufgabe wird durch die Merkmale der unabhängigen Ansprüche gelöst. Vorteilhafte Weiterbildungsformen sind Gegenstand der abhängigen Ansprüche.

Die Erfindung basiert auf der Erkenntnis, dass ein effizientes Getriebekonzept auf der Basis von zwei parallelen Rotationsscheiben realisiert werden kann, in welchen jeweils zumindest eine Bewegungsbahn für zumindest ein Kopplungselement gebildet ist. Bei einer parallelen Anordnung der Oberflächen der Rotationsscheiben zueinander sind die in der jeweiligen Rotationsscheibe gebildeten Bewegungsbahnen bevorzugt einander zugewandt. Wird ein Koppelelement derart zwischen die Rotationsscheiben eingebracht, dass es gleichzeitig entlang beider Bewegungsbahnen bewegbar ist, so entsteht eine Kopplung zwischen den beiden Rotationsscheiben, welche eine kraftabhängige Übersetzung ermöglicht. Wird beispielsweise eine der Rotationsscheiben angetrieben, so wird das Koppelelement gezwungen, entlang der in dieser

Antriebsrotationsscheibe gebildeten Bewegungsbahn zu laufen. Gleichzeitig wirkt das Koppelelement auf die in der Abtriebsrotationsscheibe gebildete Bewegungsbahn und läuft entlang dieser, so dass die Abtriebsrotationsscheibe in Bewegung versetzt wird. Dabei wandert das Koppelelement entlang einer Gesamtbewegungsbahn, welche durch eine Übereinanderlegung der Bewegungsbahnen in den beiden Rotationsscheiben gebildet ist. Dadurch wird erreicht, dass der Antrieb und der Abtrieb in einer Ebene bewirkt werden können. Hierzu sind ferner keine Zwischenwellen oder weitere Wellen notwendig, so dass sowohl die Dimensionen als auch die Herstellungskosten des Getriebes reduziert werden können. Darüber hinaus kann das Übersetzungsverhältnis variabel gestaltet werden. Ferner fallen die Rotationsachsen der Rotationsscheiben, d.h. der Abtrieb und der Abtriebsrotationsscheibe zusammen, wodurch die Dimensionen des Getriebes weiter reduziert werden können. Die Rotationsscheiben wirken ferner nicht unmittelbar aufeinander ein, weil die Kopplung ausschließlich durch das Koppelement oder durch eine Mehrzahl von Koppelelementen bewirkt wird. Dadurch ist große Flexibilität des Getriebes gegeben, da bei anderen gewünschten Übersetzungen eine der Rotationsscheiben einfach ausgetauscht werden kann. Darüber hinaus ist mit vermindertem Verschleiß des Getriebes zu rechnen.

Gemäß einer Ausführungsform betrifft die Erfindung ein Übersetzungsgetriebe mit einem Koppelelement, einer ersten Rotationsscheibe, in welcher eine erste Bewegungsbahn für das Koppelelement gebildet ist, einer zweiten Rotationsscheibe, in welcher eine zweite Bewegungsbahn für das Koppelelement gebildet ist, wobei die erste Bewegungsbahn und die zweite Bewegungsbahn einander zugewandt sind und wobei das Koppelelement zwischen der ersten Rotationsscheibe und der zweiten Rotationsscheibe angeordnet und gleichzeitig entlang der ersten Bewegungsbahn und der zweiten Bewegungsbahn geführt bewegbar ist. Die Rotationsscheiben sind bevorzugt derart parallel zueinander angeordnet, dass deren Oberflächen einander zugewandt sind. Die Bewegungsbahnen können als Durchbrüche oder als Positionsausnehmungen in der jeweiligen Oberfläche gebildet werden.

Gemäß einer Ausführungsform ist eine Mehrzahl von Koppelelementen vorgesehen, welche zwischen die erste Rotationsscheibe und der zweiten Rotationsscheibe angeordnet und entlang der ersten Bewegungsbahn geführt bewegbar sind. Die Bewegungsbahn der ersten Rotationsscheibe kann beispielsweise umlaufend sein, während in der zweiten Rotationsscheibe eine Mehrzahl von Durchbrüchen vorgesehen ist, welche jeweils eine Bewegungsbahn für das jeweilige Koppelelement bildet. Die Durchbrüche können beispielsweise als radiale Schlitze gebildet sein.

Gemäß einer Ausführungsform ist das Übersetzungsverhältnis oder die momentane Bewegungsbahn des Koppelelementes durch einen Momentanwinkel zwischen der ersten Bewegungsbahn und der zweiten Bewegungsbahn bestimmt. Der Momentanwinkel wird, bei einer Relativrotation der beiden Rotationsscheiben bezüglich einander, durch eine momentane Stellung der Bewegungsbahnen bezüglich einander bestimmt.

Gemäß einer Ausführungsform ist die erste Bewegungsbahn um eine Rotationsachse der ersten Rotationsscheibe gebildet. Die erste Bewegungsbahn kann beispielsweise sternförmig oder oval oder umlaufend gebildet sein. Die erste Bewegungsbahn kann beispielsweise umlaufend und unterbrechungsfrei sein.

Gemäß einer Ausführungsform umfasst die erste Bewegungsbahn zumindest einen Bewegungsabschnitt, welcher durch einen Abschnitt einer logarithmischen Spirale definiert ist. Die erste Bewegungsbahn kann beispielsweise sternförmig gebildet sein, wobei die Flanken der Sternarme beispielsweise in der Gestalt eines Abschnitts einer logarithmischen Spirale gebildet sein können.

Gemäß einer Ausführungsform umfasst die zweite Bewegungsbahn zumindest einen sich von einer Rotationsachse der zweiten Rotationsscheibe radial nach außen erstreckenden Schlitz oder Durchbruch. Die Stellung des Koppelelementes bezüglich des Schlitzes oder Durchbruches wird jeweils beispielsweise durch die erste Bewegungsbahn bestimmt, welche umlaufend sein kann. Handelt es sich bei der ersten Rotationsscheibe um eine Antriebsscheibe, so entsteht aufgrund des in der zweiten Rotationsscheibe gebildeten Schlitzes eine vorteilhafte Kopplung, welche auch kraftabhängig sein kann.

Gemäß einer Ausführungsform umfasst die zweite Bewegungsbahn eine Mehrzahl sich von einer Rotationsachse der zweiten Rotationsscheibe radial nach außen erstreckenden Schlitzen oder Durchbrüchen, wobei jeder Schlitz eine Bewegungsbahn für ein Koppelelement einer Mehrzahl von Koppelelementen formt. Bevorzugt ist genau jedem Schlitz genau ein Koppelelement zugeordnet, wobei die Mehrzahl der Koppelelemente gleichzeitig entlang derselben, ersten Bewegungsbahn laufen kann. Auf diese Weise können höhere Drehmomente oder Kräfte übertragen werden.

Gemäß einer Ausführungsform ist ein erstes Ende des Koppelelementes entlang der ersten Bewegungsbahn führbar, wobei ein zweites Ende des Koppelelementes entlang der zweiten Bewegungsbahn führbar ist. Bevorzugt sind die Enden des Koppelelementes in der jeweiligen Bahn, welche als eine Positionsausnehmung gebildet sein kann, angeordnet.

Gemäß einer Ausführungsform ist das Koppelelement ein Stift oder ein Rollzylinder oder eine Kugel oder ein Rotationsellipsoid. Dasselbe gilt für die Mehrzahl der vorstehend genannten Koppelelemente.

Gemäß einem weiteren Aspekt betrifft die Erfindung ein Verfahren zum Übersetzen einer Antriebsdrehzahl einer ersten Rotationsscheibe, in welcher eine erste Bewegungsbahn für ein Koppelelement gebildet ist in eine Abtriebsdrehzahl einer zweiten Rotationsscheibe, in welcher eine zweite Bewegungsbahn für das Koppelelement gebildet ist, bei dem die erste Rotationsscheibe angetrieben wird und bei dem das Koppelelement zwischen der ersten Rotationsscheibe und der zweiten Rotationsscheibe entlang der ersten Bewegungsbahn und der zweiten Bewegungsbahn geführt wird. Die Momentanbahn des Koppelelementes ergibt sich somit aus der Momentanstellung der beiden Bewegungsbahnen bezüglich einander.

Weitere Verfahrensschritte ergeben sich unmittelbar aus der Funktionsweise des erfindungsgemäßen Übersetzungsgetriebes.

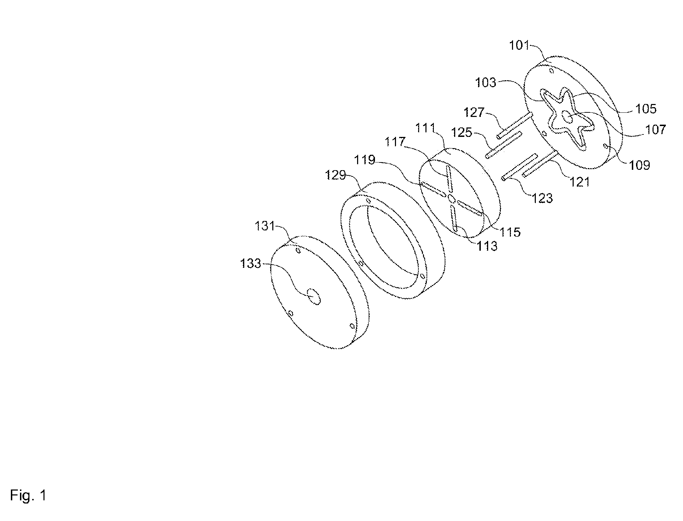

Weitere Ausführungsbeispiele werden Bezug nehmend auf Fig. 1 erläutert, welche eine Ausführungsform eines Übersetzungsgetriebes zeigt.

Das Übersetzungsgetriebe umfasst eine erste Rotationsscheibe 101, in welcher eine erste Bewegungsbahn 103 gebildet ist. Die erste Bewegungsbahn 103 ist beispielsweise sternenförmig gebildet, wobei die Flanken 105 der Sternenarme beispielsweise in der Gestalt einer abschnittsweisen logarithmischen Spirale gebildet sein können. Die erste Bewegungsbahn 103 ist beispielsweise umlaufend um eine Rotationsachse der ersten Rotationsscheibe 101, welche beispielsweise durch einen zentralen Durchbruch 107, welcher in der ersten Rotationsscheibe 101 gebildet ist, verläuft. Die erste Rotationsscheibe 101 kann ferner Positionsausnehmungen 109 aufweisen.

Das Übersetzungsgetriebe weist ferner eine zweite Rotationsscheibe 111, in welcher eine Mehrzahl von zweiten Bewegungsbahnen 113, 115, 117 und 119 gebildet ist. Die zweiten Bewegungsbahnen 113 bis 119 können beispielsweise als radial nach außen gebildete Schlitze oder Durchbrüche in der zweiten Rotationsscheibe 111 gebildet sein.

Ferner ist eine Mehrzahl von Koppelelementen 121, 123, 125, 127, vorgesehen, wobei jedes Koppelelement mit dem jeweiligen ersten Ende entlang der ersten Bewegungsbahn 103 geführt bewegbar ist und mit dem jeweiligen zweiten Ende entlang der jeweiligen zweiten Bewegungsbahn 113 bis 119 geführt bewegbar ist. Diese Koppelelemente 121 bis 127 können beispielsweise als Rollzylinder gebildet sein.

Optional umfasst das Übersetzungsgetriebe ferner einen Kapselzylinder 129.

Ferner kann eine dritte Rotationsscheibe 131 vorgesehen sein, in welcher eine, in Fig. 1 nicht dargestellte, dritte Bewegungsbahn gebildet ist, deren Form der ersten Bewegungsbahn 101 entspricht, so dass sich beide Bewegungsbahnen spiegelbildlich gegenüberstehen.

Gemäß einem Ausführungsbeispiel ist die erste Rotationsscheibe 101 mit einer Bewegungsbahn versehen, welche zumindest abschnittsweise als eine logarithmische Spiralscheibe ausgebildet ist, und daher im Folgenden als Spiralscheibe bezeichnet wird, weist beispielsweise eine sternförmige Einfräsung auf, welche die erste Bewegungsbahn 103 bildet. Sie dient beispielsweise als eine ununterbrochene Laufbahn für die kraftübertragenden beispielsweise als Rollzylinder ausgebildeten Koppelelemente 121 bis 127, und kann so ausgebildet sein, dass die Sternflanken Ausschnitte 105 aus einer logarithmischen Spirale bilden. Der Winkel einer Tangente durch einen Punkt der jeweiligen Sternflanke 105 und der Durchmessergerade durch diesen Punkt ist bevorzugt an jeden Punkt der Sternflanke 105 gleich. Ausnahmen können die Wendepunkte an den inneren und äußeren Spitzen der Laufbahn bildet. Die erste Rotationsscheibe 101 kann fest mit einer der Getriebeachsen verbunden sein.

Die zweite Rotationsscheibe 111 ist beispielsweise als eine mittlere Rotationsscheibe vorgesehen, welche aufgrund der darin angeordneten und, gemäß einem Ausführungsbeispiel, jeweils eine zweite Bewegungsbahn formenden Schlitze 113 bis 119 im Folgenden als Schlitzscheibe bezeichnet wird, kann eine bestimmte Anzahl an radial verlaufenden Durchbrüchen aufweisen, welche die Schlitze 113 bis 119 bilden können. Sie dienen als ein Laufkäfig für die kraftübertragenden Rollzylinder 121 bis 127 und ermöglichen eine Bewegung der Rollzylinder 121 bis 127 in radialer Richtung, verhindern jedoch, dass sich die Rollzylinder 121 bis 127 in der unendlichen, sternförmigen Laufbahn der Spiralscheibe, d.h. der ersten Rotationsscheibe 101, berühren. Die Durchbrüche 113 bis 119 können genau entlang der Durchmesserlinien verlaufen, können aber auch schräg dazu oder bogenförmig verlaufen. Bevorzugt ist jedoch ein konstanter Winkel zwischen den Tangenten an den kraftübertragenden Laufflächen, d.h. der Bewegungsbahnen 103 und 113 bis 119 der beiden Rotationsscheiben 101 und 111 vorgesehen. Die Schlitzscheibe, d.h. die zweite Rotationsscheibe 111, kann fest mit einer zweiten Getriebeachse verbunden sein.

Die dritte Rotationsscheibe 131, welche aufgrund der gemäß einem Ausführungsbeispiel darin zumindest abschnittsweise logarithmisch-spiralförmigen Bewegungsbahn als Gegenspiralscheibe bezeichnet werden kann, umfasst beispielsweise die gleiche durch beispielsweise eine Einfräsung gebildete dritte Bewegungsbahn, wie die erste Rotationsscheibe 101, und ist beispielsweise so ausgerichtet, dass sich beide Bewegungsbahnen der ersten Rotationsscheibe 101 und der dritten Rotationsscheibe 131 spiegelbildlich gegenüber stehen. Die Gegenspiralscheibe 131 bildet beispielsweise das Gegenlager für die Rollzylinder 113 bis 119 und ist bevorzugt nicht fest mit einer Achse verbunden. Stattdessen kann die Gegenspiralscheibe 131 eine zentrale Bohrung 133 aufweisen, durch die die Achse der Schlitzscheibe 111 hindurchgeführt wird. Bei gekapselten Systemen kann zwischen der Gegenspiralscheibe 131 und der hindurch geführten Achse eine Radialwellendichtung angebracht werden.

Um eine Kapselung zu erreichen, können die Spiralscheibe 101 und die Gegenspiralscheibe 131 mit dem Kapselzylinder 129 verbunden sein. Der Kapselzylinder 129 kann als Kapselring ausgeführt sein, dessen Innendurchmesser größer ist als der Durchmesser der Schlitzscheibe 111. Er sorgt nicht nur für eine Verkapselung des Systems, sondern auch für die richtige Ausrichtung der Spiralscheibe 111 und der Gegenspiralscheibe 131. Als Verbindungselemente zwischen den Spiralscheiben 101 und 131 sowie dem Kapselring 129 können auf Grund der höheren Präzision Passschrauben verwendet werden. Zudem können die Stoßstellen zwischen dem Kapselzylinder 129 und den Spiralscheiben, d.h. den Rotationsscheiben 101, 131, abgedichtet sein, um ein Austritt von Schmiermittel zu verhindern.

Die Rollzylinder 121 bis 127 sind die kraftübertragenden Elemente des Getriebes und bilden eine mechanische Verbindung zwischen der Schlitzscheibe 111 und der Spiralscheibe 101. In jedem der Durchbrüche 113 bis 119 der Schlitzscheibe 101 läuft beispielsweise genau ein Rollzylinder 121 bis 127, der beispielsweise an beiden Seiten der Schlitzscheibe 111 so lang heraussteht, dass er in die jeweilige Laufbahn, d.h. Bewegungsbahn, der Spiralscheiben 101 und 131 eingreift. Die Geometrie der Rollzylinder 121 bis 127 kann angepasst werden, um z.B. Fertigungstoleranzen in den Rotationsscheiben 101, 111, 131, auszugleichen. Denkbar sind konkave auch oder konvexe Formen und sogar Kugeln, etc.

Im Betrieb kann beispielsweise die erste Rotationsscheibe 101 als die Antriebsscheibe und die zweite, mittlere Rotationsscheibe 111 als Abtriebscheibe 111 wirken. Die Drehzahländerung von Abtriebs- zu Antriebsscheibe beruht darauf, dass die Laufbahnen von Spiralscheibe 101 und Schlitzscheibe 111 nicht parallel zu einander, sondern in einem gewissen Winkel stehen und somit ein Teil der auf die Rollzylinder 121 bis 127 wirkenden Antriebskraft in radiale Bewegung umgesetzt wird und somit, auch im Zusammenspiel mit der Laufbahnengeometrie, eine von der Antriebsdrehzahl unterschiedliche Abtriebsdrehzahl generiert wird. Das Über- bzw. Untersetzungsverhältnis hängt beispielsweise vom Winkel der Laufbahntangenten, sowie von einem Verhältnis von Massenträgheitsmoment am Abtrieb zum Antriebsmoment ab. Ist das Massenträgheitsmoment am Abtrieb einstellbar, so kann ein stufenlos einstellbares Getriebe erreicht werden. Prinzipiell können beide Rotationsscheiben 101, 111 als Antriebs- bzw. Abtriebsscheiben dienen.

Die Zahl der Durchbrüche in der Schlitzscheibe 111 und auch die Zahl der Wendepunkte in der Laufbahn, d.h. der Bewegungsbahn 103, der Spiralscheibe 101 sind frei wählbar. Bei der Ausgestaltung des Übersetzungsgetriebes können daher die folgenden Aspekte bzw. Parameter berücksichtigt bzw. gewählt werden:
- Der Tangentenwinkel zwischen den Bewegungsbahnen der ersten Rotationsscheibe 101 und der zweiten Rotationsscheibe 111;
- Die Geometrie der Bewegungsbahnen kann so gewählt werden, dass sich maximal ein Rollzylinder 121 bis 127 an einem Wendepunkt befinden kann;
- Die Zahl der Durchbrüche 113 bis 119 bzw. der Rollzylinder 121 bis 127 kann entsprechend der zu übertragenden Kräfte gewählt werden;
- Die Breite der Rotationsscheiben 101, 111, 131, die Frästiefe der Rollbahnen, d.h. der Bewegungsbahnen, sowie der Zylinderdurchmesser der Rollzylinder 121 bis 127 könne ebenfalls nach den zu übertragenden Kräften gewählt werden.

Darüber hinaus sind auch Varianten mit schaltbaren Mehrscheibensystemen herstellbar.

Das Übersetzungsgetriebe kann ferner als ein Umlaufwalzengetriebe zur Überund Untersetzung von Drehzahlen eingesetzt werden und drei oder mehr Koaxial angeordneten Rotationsscheiben umfassen.

Die Vorteile des Übersetzungsgetriebes liegen bei den geringen Herstellungskosten, da die Fertigung von Zahnrädern sehr aufwendig und, gerade bei geringeren Stückzahlen, kostenintensiv ist. Es ist ferner eine koaxiale Kraftübertragung ohne Zwischenwellen möglich. Zudem befinden sich alle oder zumindest einige der kraftübertragenden Elemente gleichzeitig im Eingriff, so dass auch hohe Kräfte bei kleinen Geometrien übertragen werden können.

## Patentansprüche

1. Übersetzungsgetriebe, mit:
einem Koppelelement (121 - 127);
einer ersten Rotationsscheibe (101), in welcher eine erste Bewegungsbahn (103) für das Koppelelement (121 - 127) gebildet ist, wobei die erste Bewegungsbahn (103) umlaufend und
unterbrechungsfrei ist und zumindest einen Bewegungsabschnitt umfasst, welcher durch einen Abschnitt einer logarithmischen Spirale definiert ist;
einer zweiten Rotationsscheibe (111), in welcher eine zweite Bewegungsbahn (113 - 119) für das Koppelelement (121 - 127) gebildet ist;
wobei die erste Bewegungsbahn (103) und die zweite Bewegungsbahn (113 - 119) einander zugewandt sind, und wobei das Koppelelement (121 - 127) zwischen der ersten Rotationsscheibe (101) und der zweiten Rotationsscheibe (111) angeordnet und gleichzeitig entlang der ersten Bewegungsbahn (103) und der zweiten Bewegungsbahn (113 - 119) geführt bewegbar ist.

2. Übersetzungsgetriebe gemäß einem der vorstehenden Ansprüche, wobei eine Mehrzahl von Koppelelementen (121 - 127) vorgesehen ist, welche zwischen der ersten Rotationsscheibe (101) und der zweiten Rotationsscheibe (111) angeordnet und entlang der ersten Bewegungsbahn (103) geführt bewegbar sind.

3. Übersetzungsgetriebe gemäß einem der vorstehenden Ansprüche, wobei ein Getriebeübersetzungsverhältnis oder eine Momentanbahn des Koppelelementes (121 - 127) durch einen Momentanwinkel zwischen der ersten Bewegungsbahn (101) und der zweiten Bewegungsbahn (113 - 119) bestimmt ist.

4. Übersetzungsgetriebe gemäß einem der vorstehenden Ansprüche, wobei die erste Bewegungsbahn (103) um eine Rotationsachse (107) der ersten Rotationsscheibe (101) gebildet ist, insbesondere sternförmig oder oval oder umlaufend gebildet ist, oder zumindest einen Bewegungsbahnabschnitt (105) aufweist, welcher durch einen Abschnitt einer logarithmischen Spirale gebildet ist.

5. Übersetzungsgetriebe gemäß einem der vorstehenden Ansprüche, wobei eine dritte Rotationsscheibe (131) mit einer dritten Bewegungsbahn vorgesehen ist, welche mit der ersten Bewegungsbahn (101) identisch ist, wobei die dritte Bewegungsbahn (131) der zweiten Rotationsscheibe (111) zugewandt ist und wobei das Koppelelement (121 - 127) entlang der ersten Bewegungsbahn (101), der zweiten Bewegungsbahn (113 - 119) und der dritten Bewegungsbahn geführt bewegbar ist.

6. Übersetzungsgetriebe gemäß einem der vorstehenden Ansprüche, wobei die zweite Bewegungsbahn (113 - 119) zumindest einen sich von einer Rotationsachse der zweiten Rotationsscheibe (111) nach außen, insbesondere radial nach außen, erstreckenden Schlitz oder Durchbruch aufweist.

7. Übersetzungsgetriebe gemäß einem der vorstehenden Ansprüche, wobei die zweite Bewegungsbahn (113 - 119) eine Mehrzahl sich von einer Rotationsachse der zweiten Rotationsscheibe (111) nach außen, insbesondere radial nach außen, erstreckenden Schlitzen aufweist, und wobei jeder Schlitz eine Bewegungsbahn für ein Koppelelement (121 - 127) einer Mehrzahl von Koppelelementen (121 - 127) formt.

8. Übersetzungsgetriebe gemäß einem der vorstehenden Ansprüche, wobei ein erstes Ende des Koppelelementes (121 - 127) entlang der ersten Bewegungsbahn (103) führbar ist und wobei ein zweites Ende des Koppelelementes (121 - 127) entlang der zweiten Bewegungsbahn (113 - 119) führbar ist.

9. Übersetzungsgetriebe gemäß einem der vorstehenden Ansprüche, wobei das Koppelelement (121 - 127) ein Stift oder ein Rollzylinder oder eine Kugel oder ein Rotationsellipsoid ist.

10. Verfahren zum Übersetzen einer Antriebsdrehzahl einer ersten Rotationsscheibe, in welcher eine erste Bewegungsbahn für ein Koppelelement gebildet ist, wobei die erste Bewegungsbahn umlaufend und unterbrechungsfrei ist und zumindest einen Bewegungsabschnitt umfasst, welcher durch einen Abschnitt einer logarithmischen Spirale definiert ist, in eine Abtriebsdrehzahl einer zweiten Rotationsscheibe, in welcher eine zweite Bewegungsbahn für das Koppelelement gebildet ist, bei dem die erste Rotationsscheibe angetrieben wird und bei dem das Koppelelement zwischen der ersten Rotationsscheibe und der zweiten Rotationsscheibe entlang der ersten Bewegungsbahn und der zweiten Bewegungsbahn geführt wird, wodurch die zweite Rotationsscheibe in Bewegung versetzt wird.

## Claims

1. Step-up gearbox, having:
a coupling element (121-127);
a first rotational disc (101), in which a first movement path (103) for the coupling element (121-127) is formed, wherein the first movement path (103) is circumferential and is interruption-free and comprises at least one movement section which is defined by a section of a logarithmic spiral;
a second rotational disc (111) in which a second movement path (113-119) for the coupling element (121-127) is formed;
wherein the first movement path (103) and the second movement path (113-119) face one another, and wherein the coupling element (121-127) is arranged between the first rotational disc (101) and the second rotational disc (111) and can be moved in a guided fashion simultaneously along the first movement path (103) and the second movement path (113-119).

2. Step-up gearbox according to one of the preceding claims, wherein a multiplicity of coupling elements (121-127) are provided which are arranged between the first rotational disc (101) and the second rotational disc (111) and can be moved in a guided fashion along the first movement path (103).

3. Step-up gearbox according to one of the preceding claims, wherein a gearbox transmission ratio or an instantaneous path of the coupling element (121-127) is determined by an instantaneous angle between the first movement path (101) and the second movement path (113-119).

4. Step-up gearbox according to one of the preceding claims, wherein the first movement path (103) is formed about a rotational axis (107) of the first rotational disc (101), in particular is formed in a star-shaped or oval or circumferential fashion, or has at least one movement path section (105) which is formed by a section of a logarithmic spiral.

5. Step-up gearbox according to one of the preceding claims, wherein a third rotational disc (131) is provided with a third movement path which is identical to the first movement path (101), wherein the third movement path (131) faces the second rotational disc (111), and wherein the coupling element (121-127) can be moved in such a way that it is guided along the first movement path (101), the second movement path (113-119) and the third movement path.

6. Step-up gearbox according to one of the preceding claims, wherein the second movement path (113-119) has at least one slot or breakthrough which extends outwards, in particular radially outwards, from a rotational axis of the second rotational disc (111).

7. Step-up gearbox according to one of the preceding claims, wherein the second movement path (113-119) has a multiplicity of slots which extend outwards, in particular radially outwards, from a rotational axis of the second rotational disc (111), and wherein each slot forms a movement path for a coupling element (121-127) of a multiplicity of coupling elements (121-127).

8. Step-up gearbox according to one of the preceding claims, wherein a first end of the coupling element (121-127) can be guided along the first movement path (103), and wherein a second end of the coupling element (121-127) can be guided along the second movement path (113-119).

9. Step-up gearbox according to one of the preceding claims, wherein the coupling element (121-127) is a pin or a rolling cylinder or a ball or a rotational ellipsoid.

10. Method for converting a drive rotational speed of a first rotational disc in which a first movement path for a coupling element is formed, wherein the first movement path is circumferential and interruption-free and comprises at least one movement section which is defined by a section of a logarithmic spiral, into a drive rotational speed of a second rotational disc in which a second movement path for the coupling element is formed, in which the first rotational disc is driven and in which the coupling element is guided between the first rotational disc and the second rotational disc along the first movement path and the second movement path, as a result of which the second rotational disc is set in motion.

## Revendications

1. Réducteur, comprenant :
un élément d'accouplement (121-127) ;
un premier disque rotatif (101) dans lequel est formée une première trajectoire de déplacement (103) pour l'élément d'accouplement (121-127), la première trajectoire de déplacement (103) étant périphérique et sans interruption et comprenant au moins une portion de déplacement qui est définie par une portion d'une spirale logarithmique ;
un deuxième disque rotatif (111) dans lequel est formée une deuxième trajectoire de déplacement (113-119) pour l'élément d'accouplement (121-127) ;
la première trajectoire de déplacement (103) et la deuxième trajectoire de déplacement (113-119) étant tournées l'une vers l'autre, et l'élément d'accouplement (121-127) étant disposé entre le premier disque rotatif (101) et le deuxième disque rotatif (111) et pouvant être déplacé de manière guidée simultanément le long de la première trajectoire de déplacement (103) et de la deuxième trajectoire de déplacement (113-119).

2. Réducteur selon l'une quelconque des revendications précédentes, dans lequel une pluralité d'éléments d'accouplement (121-127) sont prévus, lesquels sont disposés entre le premier disque rotatif (101) et le deuxième disque rotatif (111) et peuvent être déplacés de manière guidée le long de la première trajectoire de déplacement (103).

3. Réducteur selon l'une quelconque des revendications précédentes, dans lequel un rapport de réduction ou une trajectoire actuelle de l'élément d'accouplement (121-127) est déterminé(e) par un angle actuel entre la première trajectoire de déplacement (101) et la deuxième trajectoire de déplacement (113-119).

4. Réducteur selon l'une quelconque des revendications précédentes, dans lequel la première trajectoire de déplacement (103) est formée autour d'un axe de rotation (107) du premier disque rotatif (101), en particulier est formée sous forme stellaire ou ovale ou périphérique, ou présente au moins une portion de trajectoire de déplacement (105) qui est formée par une portion d'une spirale logarithmique.

5. Réducteur selon l'une quelconque des revendications précédentes, dans lequel un troisième disque rotatif (131) est prévu avec une troisième trajectoire de déplacement qui est identique à la première trajectoire de déplacement (101), la troisième trajectoire de déplacement (131) étant tournée vers le deuxième disque rotatif (111) et l'élément d'accouplement (121-127) pouvant être déplacé de manière guidée le long de la première trajectoire de déplacement (101), de la deuxième trajectoire de déplacement (113-119) et de la troisième trajectoire de déplacement.

6. Réducteur selon l'une quelconque des revendications précédentes, dans lequel la deuxième trajectoire de déplacement (113-119) présente au moins une fente ou un orifice s'étendant depuis un axe de rotation du deuxième disque rotatif (111) vers l'extérieur, notamment radialement vers l'extérieur.

7. Réducteur selon l'une quelconque des revendications précédentes, dans lequel la deuxième trajectoire de déplacement (113-119) présente une pluralité de fentes s'étendant depuis un axe de rotation du deuxième disque rotatif (111) vers l'extérieur, en particulier radialement vers l'extérieur, et chaque fente formant une trajectoire de déplacement pour un élément d'accouplement (121-127) d'une pluralité d'éléments d'accouplement (121-127).

8. Réducteur selon l'une quelconque des revendications précédentes, dans lequel une première extrémité de l'élément d'accouplement (121-127) peut être guidée le long de la première trajectoire de déplacement (103) et dans lequel une deuxième extrémité de l'élément d'accouplement (121-127) peut être guidée le long de la deuxième trajectoire de déplacement (113-119).

9. Réducteur selon l'une quelconque des revendications précédentes, dans lequel l'élément d'accouplement (121-127) est une broche ou un cylindre de roulement ou une bille ou une ellipsoïde de rotation.

10. Procédé pour démultiplier une vitesse de rotation d'entraînement d'un premier disque rotatif dans lequel est formée une première trajectoire de déplacement pour un élément d'accouplement, la première trajectoire de déplacement étant périphérique et sans interruption et comprenant au moins une portion de déplacement qui est définie par une portion d'une spirale logarithmique, en une vitesse de rotation de sortie d'un deuxième disque rotatif, dans lequel est formée une deuxième trajectoire de déplacement pour l'élément d'accouplement, dans lequel le premier disque rotatif est entraîné et dans lequel l'élément d'accouplement est guidé entre le premier disque rotatif et le deuxième disque rotatif le long de la première trajectoire de déplacement et de la deuxième trajectoire de déplacement de sorte que le deuxième disque rotatif soit mis en mouvement.
